# EUROPÄISCHE PATENTSCHRIFT

(11) **EP 1 958 148 B1**
(45) Veröffentlichungstag und Bekanntmachung des Hinweises auf die Patenterteilung: **07.03.2012**
(21) Anmeldenummer: 06830374.2
(22) Anmeldetag: 05.12.2006
(51) Int. Cl.: G06T 1/00, G06T 7/00

(54) **VERFAHREN ZUR AUFNAHME DIGITALER ABBILDUNGEN**
METHOD FOR TAKING DIGITAL IMAGES
PROCEDE POUR PRENDRE DES IMAGES NUMERIQUES

(30) Priorität: 06.12.2005 DE 102005058353
(43) Veröffentlichungstag der Anmeldung: 20.08.2008
(73) Patentinhaber: Ruppert, Wilhelm, 50996 Köln (DE)
(72) Erfinder: Ruppert, Wilhelm, 50996 Köln (DE)
(74) Vertreter: Patentanwälte Freischem
(86) Internationale Anmeldenummer: PCT/EP2006/069325
(87) Internationale Veröffentlichungsnummer: WO 2007/065894

(56) Entgegenhaltungen:
- EP-A- 0 081 322
- WO-A-2004/078040
- US-B1- 6 288 843
- US-B1- 6 563 499
- EIFERT ET AL: "Prediction of raw produce surface area from weight measurement" JOURNAL OF FOOD ENGINEERING, BARKING, ESSEX, GB, Bd. 74, Nr. 4, Juni 2006 (2006-06), Seiten 552-556, XP005276050 ISSN: 0260-8774
- KAIDAN INC.: "KAIDAN Meridian MT84 - User's Guide"[Online] 11. November 2000 (2000-11-11), XP002428652 KAIDAN INCORPORATED, 703 E. PENNSYLVANIA BLVD, FEASTERVILLE, PA 19053, U.S.A. Gefunden im Internet: URL:http://www.kaidan.com/pdf/MT-84_Manual .pdf> [gefunden am 2007-04-10] in der Anmeldung erwähnt
- KAWASAKI H ET AL: "Entire model acquisition system using handheld 3D digitizer" 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6. September 2004 (2004-09-06), Seiten 478-485, XP010725249 ISBN: 0-7695-2223-8

## Beschreibung

### Technisches Gebiet

Die Erfindung betrifft ein Verfahren zur Aufnahme von digitalen Abbildungen darzustellender Gegenstände, insbesondere Kraftfahrzeuge, aus unterschiedlichen Betrachtungswinkeln sowie eine Vorrichtung zur Durchführung eines derartigen Verfahrens.

### Stand der Technik

Derartige Aufnahmen werden häufig zur Präsentation von Gegenständen verwendet, die zum Verkauf angeboten werden. Insbesondere werden Kraftfahrzeuge im Internet in einer sogenannten 360°-Ansicht präsentiert. Dabei kann der Betrachter ein Fahrzeug von allen Seiten betrachten. Bei der Darstellung auf dem Bildschirm scheint das betrachtete Fahrzeug sich drehen zu lassen.

Eine derartige Darstellung ist aber nicht auf Fahrzeuge beschränkt und kann für die Präsentation beliebiger anderer Gegenstände eingesetzt werden. Üblicherweise werden von den darzustellenden Gegenständen Einzelaufnahmen hergestellt. Dies ist ein aufwendiger und zeitintensiver Vorgang, da für die Erzeugung eine Aufnahme des Fahrzeuges in jedem Betrachtungswinkel eine neue Vorbereitung und Einstellung der Aufnahmekamera erforderlich ist.

Die auf der Internet-Homepage www.kaidan.com veröffentlichte PDF-Datei "KAIDAN Meridian MT84 - User's Guide" offenbart ein Aufnahmesystem, welches mit einer Drehscheibe arbeitet. Hier wird Anfangsposition und Endposition der Bewegung der Drehscheibe definiert, die bei der Durchführung der Aufnahmen angefahren werden. Ferner wird ein Inkrement definiert, das die Winkeldistanz für die Bewegung der Einheit unter automatischer Steuerung ist. Die Einheit verfährt also jeweils um das Inkrement, bevor eine neue Aufnahme gemacht wird. Durch Eingabe eines "Delay"-Wertes für die Drehscheibe kann die Zeitdauer festgelegt werden, die gewartet wird, bevor eine Bewegung in eine neue Position ausgelöst wird. Wenn eine vollständige Rundumansicht z.B. in Winkelschritten von 10° erstellt wird, muß die Drehscheibe dieser Vorrichtung 36 mal beschleunigt und wieder abgebremst werden. Dies ist sehr zeitaufwendig und erfordert für die Anfertigung von Aufnahmen schwerer Gegenstände wie PKW den Einsatz sehr leistungsstarker Antriebe und Bremsen.

Die Druckschrift Kawasaki H et al.: "Entire model acquisition system using handheld 3D digitizer", Proceedings 2nd International Symposium on 3D Data Processing, Visualization and Transmission, 2004. Thessaloniki, Greece 6-9 Sept. 2004, Piscataway, NJ, USA, IEEE, 6. September 2004, Seiten 478-485, XP010725249 beschreibt eine Vorrichtung, die ein Objekt mit projizierten Lichtstrahlen kontinuierlich abtastet, wobei die aktuelle Winkelstellung der Drehscheibe gemessen, jedoch keinerlei Triggersignal erzeugt wird, welches eine Bildaufnahme auslöst.

Die Patentschrift US 6 563 499 B1 (Waupotitsch et al.) beschreibt ebenfalls eine Digitalisierungsvorrichtung für 3D Objekte mit kontinuierlicher Bildaufnahme des Objekts durch eine Kamera, ohne dass hierbei Triggersignale erzeugt werden, die eine Bildaufnahme gezielt auslösen.

### Darstellung der Erfindung

Aufgabe der Erfindung ist es, ein Aufnahmeverfahren zu schaffen, welches schnell und mit geringem Datenaufkommen eine qualitativ hochwertige Aufnahme von Gegenständen aus verschiedenen Betrachtungswinkeln ermöglicht.

Zur Lösung dieser Aufgabe umfaßt das Verfahren die folgenden Schritte:
- Anordnen des Gegenstands auf einer Drehscheibe,
- kontinuierliches Drehen der Drehscheibe,
- Erzeugen von elektronischen Triggersignalen beim Drehen der Drehscheibe in bestimmten Winkelstellungen der Drehscheibe,
- Übertragung der Triggersignale an eine Steuervorrichtung für eine digitale Kamera,
- Aufnahme einer Abbildung durch die digitale Kamera bei Empfang eines Triggersignals.

Mit anderen Worten werden alle Aufnahmen in den unterschiedlichen Betrachtungswinkeln durch eine stationär angeordnete Kamera aufgenommen, wobei der darzustellende Gegenstand auf einer Drehscheibe angeordnet ist, welche kontinuierlich gedreht wird und während der Drehung in bestimmten Winkelstellungen Triggersignale erzeugt, die die Abspeicherung einer durch die digitale Kamera aufgenommenen Abbildung bewirken. Die Kamera ist vorzugsweise eine Videokamera, welche einen Video-Datenstrom an eine Steuervorrichtung für die Kamera überträgt. Üblicherweise sind Videokameras mit CCD-Bildsensoren zur Aufnahme des Bildes ausgerüstet. Die Steuervorrichtung speichert bei Empfang eines Triggersignals ein Einzelbild aus dem Video-Datenstrom in einer Datenspeichervorrichtung ab. Eine derartige Funktion wird auch als Frame-Grabbing bezeichnet, d.h., der Datenstrom mit einzelnen Videobildern liegt an einer Eingangsschnittstelle der Steuervorrichtung kontinuierlich an, wobei die Steuervorrichtung bei Empfang bestimmter Signale einzelne Bilder (in Englisch frames) abspeichert.

Das Verfahren gemäß der Erfindung ermöglicht ein sehr effizientes und schnelles Erstellen einer vollständigen Rundumansicht des darzustellenden Gegenstandes. Um die erforderlichen Abbildungen, aufzunehmen, muß die Drehscheibe mit dem darzustellenden Gegenstand lediglich einmal eine vollständige Umdrehung um 360° ausführen. Die Drehgeschwindigkeit wird so gewählt, daß durch die Bewegung des Gegenstandes keine qualitative Beeinträchtigung der Aufnahme erfolgt. Beispielsweise kann die volle Umdrehung etwa 30 bis 60 Sekunden dauern. Derartig langsame Drehgeschwindigkeiten des Fahrzeuges beeinträchtigen die Qualität der Aufnahme nicht. Da die Drehscheibe bei der Durchführung der Aufnahmen kontinuierlich gedreht wird und nicht für jede einzelne Aufnahme beschleunigt und gebremst werden muß, ist die mechanische Beanspruchung der Drehscheibe bei der Erstellung der Aufnahmen minimal und die Antriebsleistung der Drehscheibe muß nicht sehr hoch sein.

In der Praxis hat sich erwiesen, daß für optisch ansprechende Präsentationen von Gegenständen wie Fahrzeugen keine kontinuierliche Bildfolge erforderlich ist. Eine Bildfolge mit Einzelbildern, bei denen sich der Betrachtungswinkel beispielsweise jeweils um 10° unterscheidet (d.h. 36 Einzelbilder für eine Drehung des Gegenstandes um 360°) ist für eine qualitativ hochwertige und ansprechende Präsentation des Gegenstandes ausreichend. Der Vorteil der getriggerten Einzelaufnahmen im Vergleich zu einer Aufnahme eines kontinuierlichen Video-Datenstroms des gedrehten Gegenstandes liegt in der erheblichen Reduzierung des Datenaufkommens für die vollständige 360°-Ansicht. Bereits bei der Aufnahme werden nur genau so viele Bilder erstellt, wie für eine ansprechende Präsentation des Gegenstandes erforderlich ist. Die Zahl der pro Gegenstand erstellten Abbildungen kann den Anforderungen an die Darstellungsqualität angepaßt werden. Es ist nicht erforderlich, in einer nachfolgenden Bearbeitung eines abgespeicherten Datenstroms die anfallende Datenmenge durch Löschen einzelner Teile des Datenstroms zu reduzieren. Hierdurch können erhebliche Kosten für die Datenverarbeitungsvorrichtungen, welche für die Durchführung des erfindungsgemäßen Verfahrens eingesetzt werden, eingespart werden.

Als Aufnahmekamera kommt jede automatisch über Signaleingänge steuerbare digitale Kamera mit Bilderfassungssensor in Frage. In der Praxis hat sich eine Videokamera bewährt, die in der Objektüberwachung eingesetzt wird. Eine derartige Videokamera verfügt über eine IEEE1394-Schnittstelle, auch Firewire-Schnittstelle genannt. Über diese Schnittstelle können sowohl Steuersignale an die Kamera übertragen werden als auch die Bilddatenströme in Echtzeit von der Kamera an elektronische Steuervorrichtungen oder Datenspeichervorrichtungen übertragen werden.

Gemäß dem erfindungsgemäßen Verfahren kann die Steuervorrichtung neben der Kamera weitere Vorrichtungen bei Empfang des Triggersignals ansteuern. Beispielsweise kann ein Blitzlicht angesteuert werden, um das aufzunehmende Objekt im Zeitpunkt der Abspeicherung eines Einzelbilds besonders intensiv auszuleuchten.

Wie oben erwähnt, erfolgt die Aufnahme aller Abbildungen bei kontinuierlichem Drehen der Drehscheibe. Der Aufnahmevorgang wird nach dem Durchlaufen eines vorgegebenen Winkels beendet. Dieser vorgegebene Winkel beträgt vorzugsweise 360°. In diesem Fall wird eine Rundumansicht des aufzunehmenden Gegenstandes erzeugt.

Vorzugsweise wird jede der aufgenommenen Abbildungen in einer digitalen Datenspeichervorrichtung in Verbindung mit einer Identifikationsangabe abgespeichert, welche dem Gegenstand eindeutig zugeordnet ist. Das erfindungsgemäße Verfahren kann vorteilhaft für die Herstellung von Präsentationsdarstellungen zu verkaufender Gegenstände, insbesondere Gebrauchtfahrzeuge, eingesetzt werden. Derartige Gebrauchtfahrzeuge werden häufig auf Internet-Homepages von Autohändlern oder Verkaufs-Plattformen präsentiert. Dabei werden neben den Abbildungen auch technische Daten und weitere Informationen über den abgebildeten Gegenstand präsentiert. Diese Daten sind vorzugsweise in einem Datensatz abgespeichert. Der Datensatz weist eine Identifikationsangabe auf, die mit entsprechenden Identifikationsangaben der abgespeicherten Abbildungen übereinstimmt. Besonders bevorzugt werden Dateinamen verwendet, welche übereinstimmende Identifikationsangaben aufweisen. So können die ersten acht oder neun Zeichen eines Dateinamens mit einer einzigartigen Zeichenfolge versehen werden, die einem bestimmten Fahrzeug zugeordnet ist. Diese Zeichenfolge taucht sowohl in dem Dateinamen für die Daten des Fahrzeuges als auch in dem Dateinamen für die einzelnen Bilder auf. Nach diesen ersten Zeichen folgt eine weitere Anzahl von Zeichen (z.B. drei oder vier), welche den bestimmten Inhalt der unterschiedlichen Datensätze kennzeichnen (z.B. Aufnahme bei 0°-Drehwinkel, Aufnahme bei 10°-Drehwinkel, Aufnahme bei 20°-Drehwinkel etc., Einzelaufnahme des Innenraums, Einzelaufnahme wesentlicher Merkmale des Fahrzeuges wie Felgen usw.).

In Verbindung mit den Abbildungen in verschiedenen Drehwinkeln können also weitere Einzelaufnahmen abgespeichert werden, die manuell erstellt werden. Wenn der darzustellende Gegenstand ein Fahrzeug ist, werden vorzugsweise Einzelaufnahmen des Fahrgastraums und von Sonderausstattungen, z.B. besonderer Felgen des Fahrzeugs, erstellt. Alle Einzelaufnahmen und zusätzliche Datensätze, die für ein bestimmtes Fahrzeug erstellt werden, sind - wie erwähnt - über eindeutige Identifikationsangaben einander zugeordnet.

Bei einer bevorzugten Ausführungsform des erfindungsgemäßen Verfahrens wird jede der aufgenommenen Abbildungen mit einer Referenzabbildung der Drehscheibe ohne darauf befindlichem Gegenstand verglichen und aus der aufgenommenen Abbildung der Hintergrund gelöscht. Auf diese Weise läßt sich eine Bildfolge des darzustellenden Gegenstandes in verschiedenen Betrachtungswinkeln erstellen, die frei von störenden Objekten der Umgebung der Aufnahme sind. Diese Bildfolge kann mit beliebigen Hintergründen kombiniert werden, so daß die aufgenommene 360°-Bildfolge je nach Wunsch des Benutzers vor verschiedenen Hintergründen präsentiert werden kann. Zum Löschen des Hintergrundes können diejenigen Punkte der aufgenommenen Abbildung gelöscht werden, die innerhalb vorbestimmter Grenzwerte den entsprechenden Bildpunkten der Referenzabbildung entsprechen. Ferner kann in der Praxis für jede Winkelstellung, in der die Drehscheibe ein elektronisches Triggersignal erzeugt, eine Referenzabbildung aufgenommen werden, die mit der in der entsprechenden Winkelstellung der Drehscheibe aufgenommenen Abbildung des Gegenstandes verglichen wird. Die Referenzabbildung in einer bestimmten Winkelstellung wird also zur Nachbearbeitung einer Objektaufnahme in der identischen Winkelstellung verwendet.

In der Praxis wird vorzugsweise vor der Aufnahme eines Gegenstands wie eines Kraftfahrzeugs eine Aufnahmeserie bei leerer Drehscheibe durchgeführt. Die Drehscheibe durchläuft ohne darauf befindlichem Objekt alle Drehpositionen und nimmt folglich eine Referenzbildfolge in den verschiedenen Drehwinkeln auf, bei denen Triggersignale abgegeben werden. Wenn später ein Fahrzeug oder ein anderer Gegenstand auf der Drehscheibe angeordnet ist, befindet sich die Drehscheibe immer in der gleichen Winkelstellung, in der sie sich bei der Erstellung der Referenzaufnahme befindet. Auf diese Weise können Strukturen oder Farbänderungen der Drehscheibe nicht zu einer Verfälschung des freigestellten Objektbildes führen. Derartige Strukturen oder Farbänderungen befinden sich bei der Referenzaufnahme in der gleichen Drehstellung wie bei der Objektaufnahme und werden aus dem Hintergrund herausgelöscht. Dabei muß nur von Zeit zu Zeit ein neuer Satz Referenzaufnahmen erstellt werden, da sich die Oberfläche und die Struktur der Drehscheibe sowie des Hintergrundes des Aufnahmeraums in der Regel nur sehr langsam verändert.

In der Praxis kann die Steuervorrichtung mit einem Schließmechanismus für mindestens einen Eingang zu dem Aufnahmeraum, in dem sich die Drehscheibe befindet, gekoppelt sein. Die Steuervorrichtung aktiviert den Schließmechanismus und verschließt somit den Eingang zum Aufnahmeraum, sobald ein Aufnahmevorgang durchgeführt wird.

Darüber hinaus kann in der Praxis ein Schließsensor an einem Schließmechanismus für mindestens einen Eingang zu dem Aufnahmeraum vorgesehen sein, wobei der Schließsensor mit der Steuervorrichtung gekoppelt ist und ein Signal abgibt, wenn der Schließmechanismus geschlossen ist. Die Steuervorrichtung läßt die Durchführung eines Aufnahmevorgangs nur dann zu, wenn das Signal, das den geschlossenen Zustand des Eingangs anzeigt, empfangen wird. Solange dieses Signal nicht empfangen wird, blockiert die Steuervorrichtung den Aufnahmevorgang. Auf diese Weise ist sichergestellt, daß die Aufnahme nur bei geschlossenem Eingang durchgeführt wird. Dies vermeidet einerseits, daß sich eine Person oder ein Objekt während der Aufnahme in den Aufnahmebereich hinein bewegt. Zum anderen wird hierdurch vermieden, daß durch den Eingang störendes Außenlicht in den Aufnahmeraum gelangt. Hierdurch wird erreicht, daß in dem Aufnahmeraum immer die gleichen Beleuchtungsverhältnisse aufgrund der hier vorhandenen Kunstbeleuchtung herrschen. Dies stellt sicher, daß der Hintergrund der Referenzaufnahme weitgehend identisch mit dem Hintergrund einer Objektaufnahme übereinstimmt und bei dem oben beschriebenen Löschungsverfahren wirkungsvoll aus der aufgenommenen Darstellung herausgelöscht werden kann.

Wenn das Verfahren zur Erzeugung von Abbildungen schwerer Gegenstände, wie beispielsweise Kraftfahrzeugen, eingesetzt wird, kann die Drehscheibe motorisch angetrieben werden. Bei leichten Gegenständen können kleine Drehscheiben eingesetzt werden, die manuell in Drehung versetzt werden.

Neben der bereits beschriebenen digitalen Kamera kann mindestens eine weitere durch die Steuervorrichtung angesteuerte digitale Kamera vorgesehen sein, die bei Empfang eines Triggersignals eine Aufnahme des Gegenstands aus einer anderen Perspektive macht als die erstgenannte Kamera. Auch diese Abbildungen werden auf einer Festplatte abgespeichert. So kann neben einem ersten Satz von 360°-Abbildungen, der üblicherweise aus einer leicht erhöhten Position (z.B. einer Kamerahöhe von 200 bis 250 cm) aufgenommen wird, ein zweiter Satz 360°-Abbildungen aufgenommen werden, die z.B. aus einer sogenannten Froschperspektive (Kamerahöhe ca. 50 cm) aufgenommen wird. Es lassen sich also zeitgleich mehrere Sätze digitaler 360°-Abbildungen erzeugen, ohne die Dauer des Aufnahmeverfahrens zu verlängern. Selbstverständlich kann auch auf diesen zweiten Satz von Abbildungen das oben beschriebene Löschverfahren angewandt werden, das den Hintergrund aus den aufgenommenen Bildern ausblendet.

Es ist auch möglich, ein Zoomobjektiv mindestens einer der Kamera zu steuern. Mindestens eine der digitalen Kameras kann ein Zoomobjektiv aufweisen, welches von der Steuervorrichtung gesteuert wird. Beispielsweise kann vor jeder Aufnahme eines Abbildungssatzes das Zoomobjektiv so verstellt werden, daß der aufzunehmende Gegenstand das Bild optimal ausfüllt. Hierzu kann beispielsweise der Gegenstand in der Ansicht mit den größten Abmessungen aufgenommen werden und das Zoomobjektiv der Kamera derart verstellt werden, daß diese größten Abmessungen sich über die gesamte Abbildung erstreckt. Auch kann der Zoom nach jeder Aufnahme verstellt werden, so daß sich die Kamera während der 360°-Drehung auf den aufgenommenen Gegenstand zu oder von diesem fort bewegt. Schließlich kann auch unmittelbar nach jeder Aufnahme eine zweite Aufnahme mit einem verstellten Zoom aufgenommen werden, so daß durch eine Kamera zwei Abbildungssätze mit unterschiedlichen Zoomfaktoren erstellt werden. Dabei ist zu beachten, daß im Falle der Durchführung des oben beschriebenen Verfahrens zum Löschen des Hintergrunds für jeden der Zoomfaktoren eine Referenzabbildung aufzunehmen ist, die dem Löschen des Hintergrunds einer Abbildung mit gleichem Zoomfaktor dient. Falls der Bildsensor der Digitalkamera eine ausreichend hohe Auflösung aufgenommen werden, kann die Zoomfunktion auch digital realisiert werden. Es können Bilddateien erzeugt werden, in denen nur ein Ausschnitt eines aufgenommenen Bildes abgespeichert wird und folglich ein größerer Zoom-Faktor realisiert ist. Allerdings führt der digitale Zoom zu einer Reduktion der Bildqualität und ist nur bis zu einem bestimmten Grenzwert durchführbar.

Die Erfindung betrifft ebenfalls eine Vorrichtung zur Aufnahme von digitalen Abbildungen, mit der das oben beschriebene Verfahren durchgeführt werden kann. Diese Vorrichtung umfaßt:
- eine kontinuierlich drehbare Drehscheibe,
- eine der Drehscheibe zugeordneten Triggervorrichtung, die beim Drehen der Drehscheibe (9) elektronische Triggersignale in bestimmten Winkelstellungen der Drehscheibe erzeugt,
- eine digitalen Kamera,
- eine Steuervorrichtung zum Steuern der Kamera,
- Übertragungsmittel zum Übertragen der Triggersignale von der Triggervorrichtung zur Steuervorrichtung,
- eine Datenspeichervorrichtung zum Abspeichern der durch die digitale Kamera bei Empfang eines Triggersignals aufgenommenen Abbildung.

Die Vorrichtung kann weitere Vorrichtungen wie Blitzlichter umfassen, die bei Empfang des Triggersignals durch die Steuervorrichtung angesteuert werden. Sie kann ferner eine Schnittstelle für den Anschluß einer manuell bedienbaren Digitalkamera umfassen. Die Videokamera zur Erzeugung der Abbildungen in verschiedenen Drehwinkeln sollte starr in dem Aufnahmeraum derart befestigt sein, daß eine Person sie nicht entfernen kann. Nur identisch übereinstimmende Kamerastellungen und Aufnahmebereiche gewährleisten eine zuverlässige automatische Erzeugung einer Bildfolge in verschiedenen Drehwinkeln und eine wirkungsvolle Ausblendung des Hintergrundes gemäß dem oben beschriebenen Verfahren. Für manuelle Aufnahmen muß eine zweite Kamera verwendet werden, die über die genannte Schnittstelle mit der erfindungsgemäßen Vorrichtung verbunden ist.

Ferner weist die Vorrichtung vorzugsweise Eingabemittel auf, mit denen Datensätze eingegeben werden können, die dem aufgenommenen Gegenstand zugeordnet sind. Bei Fahrzeugen werden über Eingabemittel wie Tastatur und Maus vorzugsweise technische Daten des Fahrzeuges sowie der Verkaufspreis eingegeben und als Datensatz abgespeichert. Insbesondere kann die Vorrichtung eine Schnittstelle für den Anschluß an ein digitales Datennetz (Internet) aufweisen. Hierdurch können bereits existierende Datensätze zu dem aufzunehmenden Gegenstand übernommen oder an die Vorrichtung übermittelt werden. Ferner ist die Kommunikation der Aufnahmevorrichtung über das Internet für die Bildbearbeitung und für die Einstellung der bearbeiteten Bilder in das Internet hilfreich.

Die Vorrichtung kann ferner einen Bildbearbeitungscomputer mit mindestens einer Datenspeichervorrichtung und einem Prozessor umfassen, der der Bearbeitung der aufgenommenen Abbildungen dient. Da die Bearbeitung der Abbildungen zeitaufwendig sein kann, kann der Bildbearbeitungscomputer von der Steuervorrichtung zur Durchführung der Aufnahme getrennt sein. Insbesondere ist der Bildbearbeitungscomputer über ein digitales Datennetz wie das Internet mit der Datenspeichervorrichtung der Aufnahmevorrichtung verbunden. Die Steuervorrichtung der erfindungsgemäßen Vorrichtung veranlaßt nach der Aufnahme einer Bildfolge deren Übertragung über das Internet zu einem Bildverarbeitungscomputer. Der Übertragungsvorgang kann relativ schnell erledigt werden, da durch die getriggerte Aufnahme in diskreten Winkeln nur eine geringe Datenmenge anfällt. Die zeitintensive Nachbearbeitung der Aufnahmefolge stört somit nicht den nachfolgenden Vorgang der Aufnahme einer neuen Bildfolge.

In der Praxis kann die erfindungsgemäße Vorrichtung den weiter oben erwähnten Schließmechanismus sowie einen Schließsensor für den Schließmechanismus aufweisen.

Zum Bewegen schwerer Gegenstände kann die Drehscheibe in der Praxis mit einem elektrisch betriebenen Motor gekoppelt sein.

Wie erwähnt, weist die Vorrichtung vorzugsweise eine Schnittstelle zum Anschluß an ein digitales Datennetz wie das Internet auf. Es wurde bereits angesprochen, daß hierdurch beispielsweise die Bildverarbeitung von der Bildaufnahme getrennt werden kann. Ferner ist eine Fernsteuerung und Fernüberwachung der erfindungsgemäßen Vorrichtung möglich.

Die Vorrichtung kann ferner eine weitere digitale Kamera umfassen, welche von der Steuervorrichtung auf der Grundlage der Triggersignale gesteuert wird. Mindestens eine der Kameras kann ein Zoomobjektiv aufweisen, welches durch die Steuervorrichtung gesteuert wird.

### Kurze Beschreibung der Zeichnungen

Ausführungsformen der Erfindung werden nachfolgend unter Bezugnahme auf die beigefügten Zeichnungen beschrieben.
- Fig. 1: zeigt eine schematische Darstellung eines Aufnahmeraums einer erfindungsgemäßen Vorrichtung zur Durchführung des erfindungsgemäßen Verfahrens.
- Fig. 2: zeigt eine schematische Darstellung der Elemente der erfindungsgemäßen Vorrichtung zur Durchführung des erfindungsgemäßen Verfahrens.
- Fig. 3-5: zeigen prinzipielle Darstellungen zur Erläute-rung der Ausblendung des Hintergrunds aus den gemäß der Erfindung hergestellten Aufnahmen.
- Fig. 6: zeigt eine schematische Beleuchtungs-anordnung für eine erfindungsgemäße Vorrichtung.

### Weg(e) zur Ausführung der Erfindung

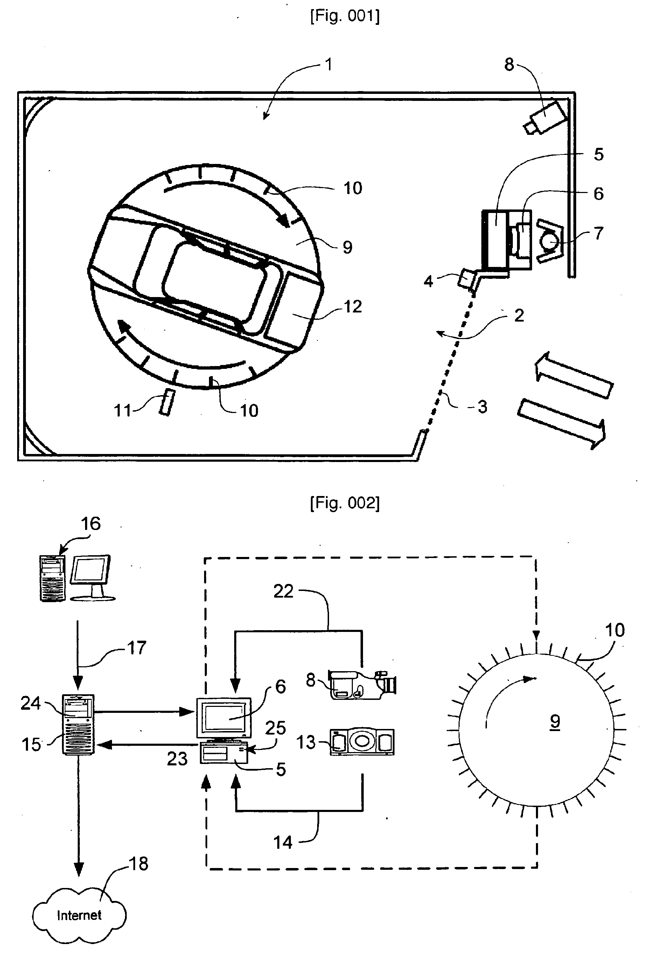

In Fig. 1 ist eine Draufsicht des Aufnahmeraums 1 dargestellt, in dem das erfindungsgemäße Aufnahmeverfahren durchgeführt wird. Der Aufnahmeraum 1 weist einen Eingang 2 auf, durch den Personen in den Aufnahmeraum 1 gelangen können und die aufzunehmenden Kraftfahrzeuge 12 einfahren und ausfahren können.

Der Eingang 2 ist mit einem Schnellauftor 3 verschließbar. Das Schnellauftor 3 ist vorzugsweise motorisch angetrieben und kann sich entweder heben und senken oder seitlich aus dem Eingang 2 herausbewegen. An einer geeigneten Stelle ist ein Schließmechanismus 4 vorgesehen, mit dem das Schnellauftor 3 in der geschlossenen Stellung arretiert werden kann. Der Schließmechanismus 4 umfaßt einen Sensor, mit dem der Zustand des Schließmechanismus 4 erfaßt werden kann. Durch das Signal des Sensors läßt sich jederzeit ermitteln, ob der Eingang 2 verschlossen oder geöffnet ist.

Der gesamte Aufnahmevorgang einschließlich die Betätigung des Schnellauftors 3 wird durch einen Computer 5 gesteuert, der die Steuervorrichtung zur Durchführung des erfindungsgemäßen Aufnahmeverfahrens bildet. In bekannter Weise umfaßt der Computer 5 eine Anzeigevorrichtung, die insbesondere als berührungsempfindlicher Bildschirm 6 (Touch Screen) ausgebildet wird. Über den Touch Screen 6 kann eine Person 7 Befehle an den Computer 5 übertragen, welche das Aufnahmeverfahren steuern und insbesondere den Beginn einer automatischen Aufnahme gemäß der Erfindung einleiten.

Ferner ist in dem Aufnahmeraum 1 eine Videokamera 8 fest installiert, welche ein Kraftfahrzeug 12 in verschiedenen Betrachtungswinkeln aufnimmt. Die Videokamera 8 ist über eine schnelle Datenleitung (z.B. Firewire) mit dem Computer 5 verbunden. Der Computer 5 überträgt über diese Datenleitung Steuersignale an die Videokamera 8 und empfängt von der Videokamera 8 aufgenommene Abbildungen, die er auf einem Massenspeicher, insbesondere einem Festplattenlaufwerk 23, ablegt.

Die Videokamera 8 ist so ausgerichtet, daß sie schräg von oben den Raum oberhalb einer Drehscheibe 9 in dem Aufnahmeraum 1 aufnimmt. Derartige Drehscheiben 9, welche eine Lastaufnahme von 2 Tonnen und mehr ermöglichen, sind beispielsweise aus dem Messebau bekannt, wo sie zur Präsentation von sich drehenden Kraftfahrzeugen eingesetzt werden. Sie werden über mindestens einen elektrischen Antriebsmotor angetrieben und sind auf Wälzlagern um ihren Mittelpunkt drehbar gelagert. Die Drehscheibe 9 besteht aus einer kreisrunden, massiven Tragplatte, z.B. aus Holz oder Kunststoff. Ein Antriebsmotor unterhalb der Drehscheibe 9 versetzt die Drehscheibe 9 in Drehung.

Der Computer 5 ist über eine geeignete Datenleitung mit der Steuerelektronik des Motors verbunden und schaltet den Motor je nach Bedarf an oder aus. An der Drehscheibe sind als kurze Striche dargestellte Markierungen 10 angeordnet. Die Markierungen 10 wirken mit einer Drehscheibe 9 zugeordneten Erfassungseinheit 11 zusammen. Die Erfassungseinheit 11 bildet eine Triggervorrichtung. Beispielsweise können die Markierungen 10 als Aussparungen in dem Material der Drehscheibe 9 ausgebildet sein, wobei die Erfassungseinheit 11 von einer Lichtschranke gebildet werden kann. Jedesmal, wenn eine Aussparung an der Lichtschranke vorbeiläuft, wird ein Signal erzeugt. Dieses Signal wird als Triggersignal über geeignete Signalübertragungsmittel an den Computer 5 übertragen. Es ist zu beachten, daß der Anschluß der einzelnen Geräte nicht nur über elektrische Leiterbahnen, sondern auch über Funkverbindungen, Infrarotverbindungen oder ähnliche Signalübertragungsverbindungen erfolgen kann.

Auch ist eine Lichtschranke lediglich ein Beispiel für eine Anordnung zur Erzeugung eines Triggersignals. Es können auch andere Markierungen 10 eingesetzt werden, beispielsweise Permanentmagnete, Spiegel oder ähnliches, die durch entsprechende Erfassungseinheiten erfaßt werden können, so daß bei der Präsenz einer Markierung 10 nahe der Erfassungseinheit 11 ein Triggersignal erzeugt wird. Es ist auch nicht unbedingt erforderlich, die Markierungen 10 unmittelbar an der Drehscheibe 9 anzubringen. Es ist auch möglich, eine Erfassungseinheit für den Drehwinkel an dem Antriebsmotor anzuordnen. Beispielsweise kann eine kreisförmige Markierungsscheibe mit lichtdurchlässigen bzw. reflektierenden Abschnitten, welche sich mit lichtundurchlässigen oder nichtreflektierenden Abschnitten abwechseln, an der Motorwelle befestigt werden, wobei eine optische Erfassungseinheit den Wechsel zwischen zwei aufeinanderfolgenden, unterschiedlichen Abschnitten erfaßt. Ein derartiger Signalgeber ermöglicht mit nahezu beliebiger Präzision die Erfassung der Drehstellung und der Drehzahl der Motorwelle. Die Motorwelle ist entweder direkt oder über ein Zahnradgetriebe mit der Drehscheibe verbunden. Ein bestimmter Drehwinkel der Motorwelle ist folglich eindeutig einem bestimmten Drehwinkel der Drehscheibe 9 zuzuordnen. Selbstverständlich kann die Drehwinkelerfassung auch an einer Welle des Zahnradgetriebes oder an einem Zahnrad dieses Getriebes durchgeführt werden.

Dabei ist es nicht erforderlich, daß die Drehwinkelerfassung die Drehbewegung der Drehscheibe 9 in den gleichen Winkelabständen erfaßt, die zwischen zwei Triggersignalen liegen. Die Drehwinkelerfassung kann auch mit einer sehr viel höheren Auflösung erfolgen. Dies ergibt sich automatisch, wenn der Motor über ein Übersetzungsgetriebe mit der Drehscheibe 9 gekoppelt ist. Je nach Auflösung der Erfassungseinheit für die Drehwinkelerfassung und nach der Übersetzung zwischen der Drehscheibe 9 und dem Ort der Drehwinkelerfassung können hunderte oder tausende Signalimpulse zwischen zwei Triggersignalen erfaßt werden. Die konkrete Anzahl der Signalimpulse zwischen zwei Triggersignalen ist bei identischen aufeinanderfolgenden Winkelabschnitten festgelegt. Durch eine hochauflösende Erfassung der Drehstellung der Drehscheibe 9 läßt sich der Drehwinkel zwischen zwei Triggersignalen sehr variabel wählen. Auch ist es möglich, einen über den Umfang der Drehscheibe 9 variierenden Winkelabstand zwischen zwei Triggersignalen zu verwirklichen. Beispielsweise kann es vorteilhaft sein, bestimmt Ansichten in kleinen Winkelschritten aufzunehmen und andere Ansichten dagegen in großen Winkelschritten aufzunehmen. Dies könnte beispielsweise mit Markierungen 10 an der Drehscheibe 9 realisiert werden, die unterschiedliche Winkelabstände zueinander aufweisen. Sehr viel einfacher läßt sich ein variables Triggern durch eine hochauflösende Drehbewegungserfassung realisieren, wobei die verschiedenen Drehpositionen der Drehscheibe 9 mit der Genauigkeit der Auflösung der Drehbewegungserfassung frei wählbar und programmierbar sind.

Das System in dem Aufnahmeraum 1 ermöglicht eine äußerst schnelle und vollautomatische Anfertigung einer Rundumansicht eines auf der Drehscheibe 9 befindlichen Fahrzeugs. Der Aufnahmevorgang läuft wie folgt ab:
1. Einfahren des Fahrzeugs durch den Eingang 2 auf die Drehscheibe 9;
2. Schließen des Schnellauftores 3;
3. Zuweisen einer eindeutigen Identifikation (KFZ-ID) zu dem aktuelle auf der Drehscheibe befindlichen Fahrzeug;
4. Start des Aufnahmevorgangs durch eine Bedienungsperson 7, welche eine entsprechende Eingabe in die Steuervorrichtung 5 macht;
5. Ansteuern des Antriebsmotors der Drehscheibe 9 durch die Steuervorrichtung 5, um die Drehscheibe 9 in kontinuierliche Drehung zu versetzen;
6. Abspeichern des von der Kamera 8 aufgenommenen Bildes in dem Moment, in dem ein erstes Triggersignal durch die Erfassungseinheit 11 an die Steuervorrichtung 5 übermittelt wird;
7. Abspeichern des von der Kamera 8 aufgenommenen Bildes in dem Moment, in dem ein zweites Triggersignal durch die Erfassungseinheit 11 an die Steuervorrichtung 5 übermittelt wird sowie Erfassung von Bildern bei allen weiteren Triggersignalen, bis die Drehscheibe 9 eine Umdrehung von 360° durchgeführt hat;
8. Öffnen des Schnellauftors 3 und Ausfahren des Kraftfahrzeuges 12;
9. Ggf. Zuordnen mindestens eines Fahrzeugdatensatzes zu der KFZ-ID.

Dabei sei angemerkt, daß die Zuweisung der KFZ-ID sowohl durch Eingabe einer alphanumerischen Kennung über eine Tastatur erfolgen kann als auch auf beliebige andere Weise. Z.B. kann beim Einfahren das Kraftfahrzeuges aus einem über ein Datennetzwerk angeschlossenen Computer eines Kraftfahrzeughändlers ein dem Fahrzeug zugeordneter Datensatz geladen werden. Dies kann durch manuellen Abruf der Daten erfolgen oder durch Einlesen eines Barcodes, der an dem Fahrzeug angebracht ist, mittels eines Barcode-Scanners. Als KFZ-ID kann eine eindeutige Angabe aus dem Fazrzeugdatensatz verwendet werden, z.B. die Fahrgestellnummer. Diese kann beispielsweise als Bestandteil jedes Dateinamens der bei dem erfindungsgemäßen Verfahren erzeugten Einzeldateien verwendet werden. Somit kann der mit der Nummer 8 bezeichnete Schritt der Zuordnung mindestens eines Fahrzeugdatensatzes zu der KFZ-ID auch mit dem Schritt 3 der Zuweisung der KFZ-ID zusammenfallen, indem die dem Fahrzeug zuzuweisende ID dem Fahrzeugdatensatz entnommen wird und somit automatisch diesem Datensatz zugeordnet ist.

Wie weiter oben erwähnt, kann die Bedienungsperson 7 nach dem Anhalten der Drehscheibe 9 mit einer manuell bedienbaren Digitalkamera zusätzliche Detailaufnahmen des Kraftfahrzeugs 12 anfertigen. Beispielsweise kann der Innenraum, die Felge und weitere Sonderausstattungen des Kraftfahrzeugs 12 auf manuell erstellten Fotos aufgenommen werden. Der Computer 5 zur Steuerung der Aufnahmeanordnung verfügt über eine Standardschnittstelle, beispielsweise eine USB-Schnittstelle, über die eine Kamera angeschlossen werden kann. Die auf dem Computer 5 ablaufende Software liest die Bilddaten aus der Kamera aus und zeigt sie dem Benutzer 7 auf der Anzeigevorrichtung 6 an. Der Benutzer 7 kann die angezeigten Bilder durch Eingabe (z.B. per Mausklick oder Touch Screen) auswählen und gemeinsam mit den Abbildungen der Rundumansicht des Kraftfahrzeuges 12 abspeichern. Das Steuerprogramm ist so eingestellt, daß es alle vor der Beendigung eines Aufnahmezugangs über eine Datenschnittstelle ausgelesenen Bilddaten demjenigen Fahrzeug zuordnet, von dem während des gleichen Aufnahmevorgangs die 360°-Aufnahmen gemacht wurden.

Um eine möglichst hochwertige Aufnahme des Kraftfahrzeugs 12 zu machen, sollte die Innenwandung des Aufnahmeraums möglichst ebenmäßig ausgebildet sein. Dabei ist der Boden des Aufnahmeraums 1 vorzugsweise mit einem hellen, matten Bodenbelag zu versehen. Die Wände des Aufnahmeraums 1 sollten ebenfalls eine helle und wenig lichtreflektierende Beschichtung aufweisen. Beispielsweise eignen sich matte Aluminiumbleche zur Beschichtung der Wände des Aufnahmeraums 1. Derartige Aluminiumbleche können fugenlos verklebt werden, so daß die Wände des Aufnahmeraums 1 wenig störende Einflüsse auf die Aufnahme ausüben.

Schließlich kann eine zweite Videokamera direkt unterhalb der dargestellten Videokamera 8 oder an einem anderen Ort im Aufnahmeraum 1 vorgesehen sein, welche bei Empfang eines Triggersignals durch die Steuervorrichtung 5 zur Aufnahme einer Abbildung aus einer anderen Perspektive als die der ersten Videokamera 8 angesteuert wird.

Die Fig. 2 zeigt noch einmal miteinander wirkende Komponenten des erfindungsgemäßen Aufnahmesystems. Hier sind gleiche Bauelemente mit gleichen Bezugszeichen wie in Fig. 1 bezeichnet.

Zunächst ist die Drehscheibe 9 schematisch dargestellt, der sechsunddreißig Markierungen 10 zugeordnet sind, welche bei Drehbewegungen der Drehscheibe in gleichmäßigen Winkelabständen von 10° Triggersignale erzeugen. Die Triggersignale werden an den Computer 5 übertragen, der im Aufnahmeraum 1 als Steuervorrichtung vorgesehen ist. An den Computer 5 ist über eine Firewire-Datenleitung 22 die Videokamera 8 angeschlossen. Sie ist - wie erwähnt - fest in dem Aufnahmeraum installiert und auf die Drehscheibe 9 gerichtet. Es ist zu beachten, daß auch andere Datenverbindungen als Firewire für den Anschluß der Videokamera 8 in Frage kommen. Wichtig ist, daß eine ausreichend hohe Übertragungsgeschwindigkeit für die von der Videokamera 8 aufgenommenen Bilder gewährleistet ist.

Ferner ist in Fig. 2 eine manuell bedienbare, digitale Fotokamera 13 dargestellt. Die bedienende Person 7 kann mit dieser digitalen Fotokamera 13 Detailabbildungen des Kraftfahrzeugs 12 aufnehmen. Die digitale Fotokamera 13 kann über ein USB-Datenkabel 14 an den Computer 5 angeschlossen werden. Auf der Vorderseite des Computers 5 sind schematisch zwei USB-Schnittstellenbuchsen 25 dargestellt, in die der Stecker des USB-Datenkabels 14 einsteckbar ist. Auch hier ist zu beachten, daß jegliches andere Datenkabel verwendet werden kann, mit dem die Kamera an eine geeignete, an dem Computer 5 vorhandene Schnittstelle (z.B. serielle Schnittstelle, parallele Schnittstelle oder Firewire-Schnittstelle) angeschlossen werden kann. Auf dem Computer 5 ist eine Software installiert, die während eines aktivierten Aufnahmevorgangs automatisch die Bilder der Fotokamera 13 herunterlädt und der gleichen KFZ-ID zuordnet, wie die in diesem Aufnahmevorgang aufgenommenen 360°-Abbildungen.

Nach Abschluß des Aufnahmevorgangs, der durch die bedienende Person beispielsweise durch Betätigung eines Steuerschalters, einer Taste oder eines Bereichs des Touch-Screens 6 signalisiert wird, überträgt der Computer 5 die aufgenommenen Bilddaten an einen Bildbearbeitungscomputer 15. Für diese Übertragung ist jedes ausreichend schnelle Datennetz geeignet. Wenn der Bildbearbeitungscomputer 15 räumlich nahe dem Computer 5 zum Steuern der Aufnahme angeordnet ist, kann beispielsweise ein lokales Netzwerk (LAN) für die Datenübertragung verwendet werden. Der Bildbearbeitungscomputer 15 kann aber auch eine weite Strecke entfernt von dem Computer 5 zur Steuerung angeordnet sein. In diesem Fall werden die Daten über das Internet zum Bildbearbeitungscomputer 15 übertragen.

Diese Datenübertragung dauert nur wenige Minuten, da durch das erfindungsgemäße Aufnahmeverfahren sichergestellt ist, daß keine übermäßig große Datenmenge anfällt. Die 360°-Ansicht erfordert lediglich sechsunddreißig Einzelaufnahmen. Weitere vier oder fünf Einzelaufnahmen sind für die Darstellung von Details in aller Regel ausreichend. Diese Bilddaten lassen sich in einer Zeit auf den Bildbearbeitungscomputer 15 übertragen, die geringer ist als die zum Herausfahren des Fahrzeuges 12 (Fig. 1) aus dem Aufnahmeraum 1 und das Einfahren des nächsten Fahrzeuges in den Aufnahmeraum 1 erforderliche Zeit.

Nach dem Übertragen der aufgenommenen Bilder auf den Bildbearbeitungscomputer 15 steht der Computer 5 erneut zur Steuerung eines weiteren Aufnahmevorgangs zur Verfügung.

Die Fig. 2 zeigt einen weiteren Fahrzeug-Datencomputer 16, in dem beispielsweise der Hersteller oder ein Händler die Daten des abgebildeten Fahrzeugs 12 gespeichert hat. Die Fahrzeugdatensätze können wie weiter oben beschrieben durch eine geeignete Datenverbindung vorzugsweise vor Beginn des Aufnahmevorgangs an den die Aufnahme steuernden Computer 5 oder den Bildbearbeitungscomputer 15 übertragen werden. Der Bildbearbeitungscomputer 15 kann auch die Bilddatenarchivierung und -verwaltung durchführen. Für die Bilddatenarchivierung und - verwaltung kann der Bildbearbeitungscomputer 15 mit einer großen Datenspeichervorrichtüng wie einem Festplattenlaufwerk 24 in der Größenordnung von über 1 Terrabyte gekoppelt sein, auf der eine Vielzahl aufgenommener Bilder abgelegt werden kann. Der Bildbearbeitungscomputer kann auch Teil eines lokalen Computernetzwerkes sein, in dem verschiedene Computer für verschiedene Aufgaben (z.B. 1. für die Bildbearbeitung, 2. für das Webhosting und 3. für die Archivierung) vorhanden und miteinander verbunden sind.

Selbstverständlich ist es auch möglich, erst die Abbildungen aufzunehmen und anschließend die Fahrzeugdaten einzugeben oder von einem anderen Computer herunterzuladen.

Die zusammengeführten Datensätze, bestehend aus der 360°-Aufnahme, den Detailabbildungen und den Fahrzeugdatensätzen werden anschließend über das Internet 18 Käufern zugänglich gemacht, die durch Anklicken einer Homepage des Händlers oder Herstellers neben den Fahrzeugdaten auch die automatisch gemäß dem erfindungsgemäßen Verfahren hergestellten Abbildungen des Kraftfahrzeugs 12 (Fig. 1) betrachten können. Die aufgenommenen Abbildungen können selbstverständlich auch anders als über das Internet präsentiert werden. Beispielsweise können die Aufnahmen zu kleinen Präsentationsfilmen zusammengeschnitten werden, die einem Präsentationsraum eines Autohändlers oder -herstellers über große Bildschirme oder Videoleinwände präsentiert werden.

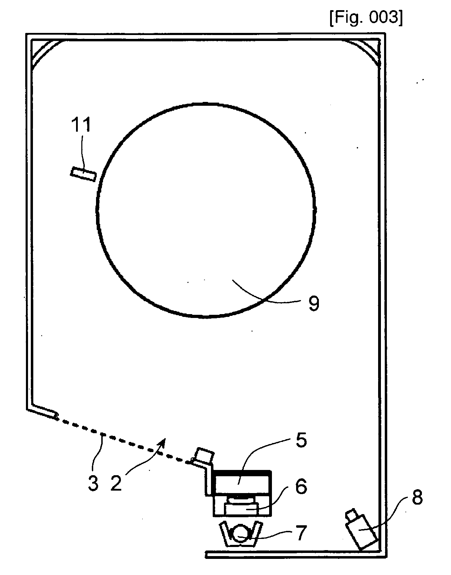

Um die Möglichkeit der visuellen Präsentation der aufgenommenen Abbildungen zu verbessern, wird das Fahrzeug in der aufgenommenen 360°-Bildfolge vom Hintergrund isoliert. Die Vorgehensweise für die Isolation des Fahrzeuges ist in den Fig. 3 bis 5 zu erkennen. In einem ersten Schritt nimmt das Aufnahmesystem eine Referenzabbildung des Aufnahmeraums über die Videokamera 8 auf. Während der Aufnahme der Referenzabbildung befindet sich kein Fahrzeug auf der Drehscheibe 9 (siehe Fig. 3). Wenn die Drehscheibe 9 aus einer sauberen homogenen Oberfläche besteht, kann eine einzige Referenzaufnahme verwendet werden, um das Fahrzeug aus jedem Bild der 360°-Bildfolge zu isolieren. Hierfür werden die einzelnen Bildpunkte (Pixel) des Bildes des Fahrzeuges 12 mit den Bildpunkten der Referenzaufnahme verglichen. Jedem Pixel sind mehrere Farbenwerte zugeordnet. In den Bereichen, in denen kein Fahrzeug auf der Abbildung dargestellt ist, stimmen die Pixel im wesentlichen identisch mit den Pixeln der Referenzaufnahme überein.

In der Praxis behält die Drehscheibe 9 häufig ihre homogene Oberfläche nicht über einen längeren Zeitraum bei. Fahrspuren und andere Farbmarkierungen finden sich nach längerem Gebrauch auf ihrer Oberfläche. Aus diesem Grund wird bei leerer Drehscheibe eine vollständige Abbildungsfolge von Referenzabbildungen bei den verschiedenen Winkelstellungen, in denen ein Triggersignal abgegeben wird, aufgenommen. Jede Referenzabbildung wird zum Löschen des Hintergrunds einer Fahrzeugabbildung bei identischer Winkelstellung verwendet.

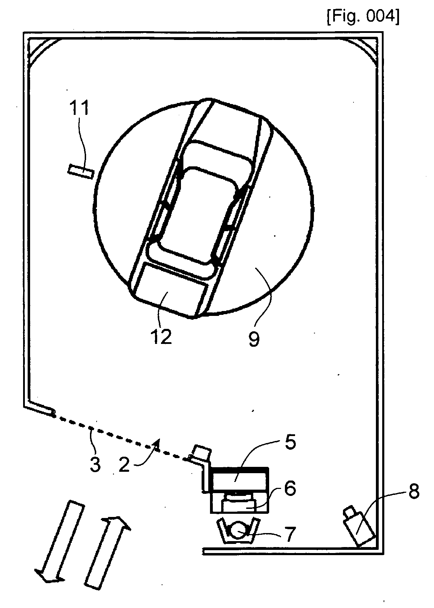

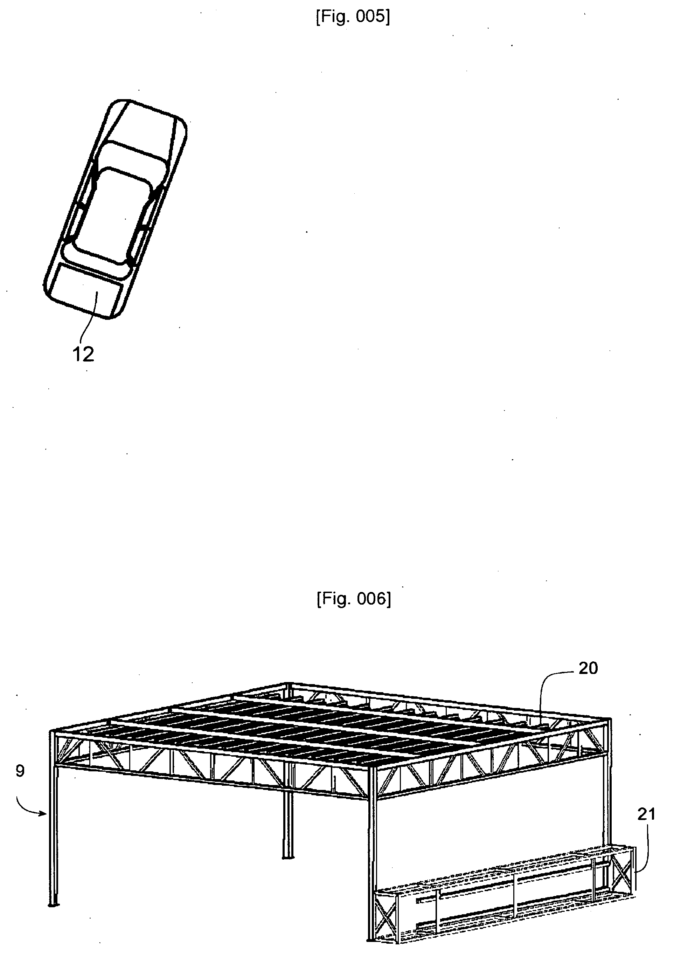

Die Fig. 5 stellt schematisch das Ergebnis dar, wenn übereinstimmende Bildpunkte der Ansichten der Fig. 3 und 4 (Referenzabbildung ohne Fahrzeug und identische Abbildung mit Fahrzeug) entfernt werden.

Selbstverständlich verbleiben nach dem Entfernen des Hintergrunds auch Schattenwürfe des Fahrzeuges. Diese sind aber erwünscht, da ein sich drehender Körper ohne Schatten unnatürlich aussieht. Allerdings wird in der Regel ein kleiner Schatten mit gleichmäßiger Fahrzeugausleuchtung bevorzugt. Aus diesem Grund ist eine starke Beleuchtung an der Decke des Aufnahmeraums 1 vorzusehen.

Die Fig. 6 zeigt ein Traggestell 19, welches der Konstruktion eines Aufnahmeraums dient. Das Traggestell 19 trägt im oberen Abschnitt eine Vielzahl von Lampen 20, in denen starke Leuchtstoffröhren angeordnet sind, welche den darunter befindlichen Aufnahmeraum ausleuchten. Die starke Ausleuchtung von oben stellt die Bildung eines kleine Schattens direkt unterhalb des Fahrzeugs sicher. An der Seite, an der die Videokamera 8 angebracht wird, ist in dem unteren Bereich des Traggestells (bis zu einer Höhe von etwa 0,80 m) ein Aufnahmegestell 21 für eine Bestrahlung von vorne vorgesehen. Diese aus der Richtung der Kamera erfolgende Bestrahlung reduziert die Schattenbildung und verbessert die Ausleuchtung des Fahrzeuges.

Mit dem in Fig. 6 erkennbaren Traggestell 19 kann ein Aufnahmeraum 1 sowohl ortsfest als auch transportabel hergestellt werden. Bei der ortsfesten Version wird das Traggestell 19 in einem Betonfundament verankert und beispielsweise mit metallischen Seitenwänden und einer Dachkonstruktion versehen. Für den transportablen Einsatz kann das Traggestell 19 nach Art eines Zeltes mit einer Dachplane und Seitenplanen versehen werden. Auf diese Weise kann die erfindungsgemäße Aufnahmevorrichtung zur Aufnahme von Gegenständen in einem größeren geografischen Gebiet eingesetzt werden. Beispielsweise kann ein Verbund von Händlern einen einzigen Aufnahmeraum teilen, wobei jeder Händler im Wechsel den Aufnahmeraum für einen bestimmten Zeitraum am Ort seiner Niederlassung aufbaut und mit den anderen Vorrichtungen zur Durchführung der erfindungsgemäßen Aufnahme versieht.

### Bezugszeichenliste:

- 1: Aufnahmeraum
- 2: Eingang
- 3: Schnellauftor
- 4: Schließmechanismus
- 5: Steuervorrichtung, Computer
- 6: Anzeigevorrichtung, Touch Screen
- 7: Person
- 8: Videokamera
- 9: Drehscheibe
- 10: Markierung
- 11: Erfassungseinheit, Triggervorrichtung
- 12: Gegenstand, Kraftfahrzeug
- 13: Digitale Fotokamera
- 14: USB-Datenkabel
- 15: Bildbearbeitungscomputer
- 16: Fahrzeugdaten-Computer
- 17: Datenverbindung
- 18: Internet
- 19: Traggestell
- 20: Lampen
- 21: Aufnahmegestell
- 22: Firewire-Datenleitung
- 23: Festplattenlaufwerk, Datenspeichervorrichtung
- 24: Festplattenlaufwerk, Datenspeichervorrichtung
- 25: USB-Schnittstellenbuchse

## Patentansprüche

1. Verfahren zur Aufnahme von digitalen Abbildungen darzustellender Gegenstände, insbesondere Kraftfahrzeuge (12), aus unterschiedlichen Betrachtungswinkeln mit folgenden Schritten:
- Anordnen des Gegenstands (12) auf einer Drehscheibe (9),
- kontinuierliches Drehen der Drehscheibe (9),
**gekennzeichnet durch**:
- Erzeugen von elektronischen Triggersignalen beim Drehen der Drehscheibe (9) in bestimmten Winkelstellungen der Drehscheibe (9),
- Übertragung der Triggersignale an eine Steuervorrichtung (5) für eine digitale Kamera (8),
- Aufnahme einer Abbildung **durch** die digitale Kamera (8) bei Empfang eines Triggersignals.

2. Verfahren nach Anspruch 1, **dadurch gekennzeichnet, daß** ein Video-Datenstrom von der Kamera (8) an die Steuervorrichtung (5) übertragen wird und daß die Steuervorrichtung (5) bei Empfang eines Triggersignals aus dem Video-Datenstrom ein Einzelbild entnimmt, das in einer Datenspeichervorrichtung (23) abgespeichert wird.

3. Verfahren nach Anspruch 1 oder 2, **dadurch gekennzeichnet, daß** die Steuervorrichtung (5) bei Empfang des Triggersignals weitere Vorrichtungen wie z.B. Blitzlichter oder ein Zoomobjektiv der Kamera (8) ansteuert.

4. Verfahren nach einem der vorangehenden Ansprüche, **dadurch gekennzeichnet, daß** die Aufnahme der Abbildungen nach einem Drehen der Drehscheibe (9) um einen bestimmten Winkel, insbesondere 360°, beendet wird.

5. Verfahren nach einem der vorangehenden Ansprüche, **dadurch gekennzeichnet, daß** jede der aufgenommenen Abbildungen in einer digitalen Datenspeichervorrichtung (23) in Verbindung mit einer Identifikationsangabe abgespeichert wird, welche dem Gegenstand eindeutig zugeordnet ist.

6. Verfahren nach Anspruch 5, **dadurch gekennzeichnet, daß** in der digitalen Datenspeichervorrichtung (23) mindestens eine zusätzliche, manuell aufgenommene Abbildung in Verbindung mit einer Identifikationsangabe abgespeichert wird, welche dem Gegenstand eindeutig zugeordnet ist.

7. Verfahren nach einem der vorangehenden Ansprüche, **dadurch gekennzeichnet, daß** jede der aufgenommenen Abbildungen mit einer - Referenzabbildung der Drehscheibe (9) ohne darauf befindlichem Gegenstand (12) verglichen wird und aus der aufgenommenen Abbildung der Hintergrund gelöscht wird, wobei vorzugsweise diejenigen Bildpunkte der aufgenommenen Abbildung gelöscht werden, die innerhalb vorbestimmter Grenzwerte den entsprechenden Bildpunkten der Referenzabbildung entsprechen.

8. Verfahren nach einem der vorangehenden Ansprüche, **dadurch gekennzeichnet, daß** die Steuervorrichtung (5) mit einem Schließsensor eines Schließmechanismus (4) für mindestens einen Eingang (2) zu dem Aufnahmeraum (1) verbunden ist, wobei der Schließsensor ein Signal abgibt, wenn der Schließmechanismus (4) geschlossen ist, und daß die Durchführung eines Aufnahmevorgangs durch die Steuervorrichtung (5) blockiert wird, solange das genannte Signal nicht empfangen wird.

9. Vorrichtung zur Aufnahme von digitalen Abbildungen darzustellender Gegenstände, insbesondere Kraftfahrzeuge (12), aus unterschiedlichen Betrachtungswinkeln mit:
- einer kontinuierlich drehbaren Drehscheibe (9),
gekenzeichnet durch
- einer der Drehscheibe (9) zugeordneten Triggervorrichtung (11), die beim Drehen der Drehscheibe (9) elektronische Triggersignale in bestimmten Winkelstellungen der Drehscheibe (9) erzeugt,
- einer digitalen Kamera (8),
- einer Steuervorrichtung (5) zum Steuern der Kamera (9),
- Übertragungsmitteln zum Übertragen der Triggersignale von der Triggervorrichtung zur Steuervorrichtung (5),
- einer Datenspeichervorrichtung (23) zum Abspeichern der durch die digitale Kamera (8) bei Empfang eines Triggersignals aufgenommenen Abbildung.

10. Vorrichtung nach Anspruch 9, **dadurch gekennzeichnet, daß** sie weitere Vorrichtungen, z.B. Blitzlichter, umfaßt, die bei Empfang des Triggersignals durch die Steuervorrichtung (5) angesteuert werden.

11. Vorrichtung nach Anspruch 9 oder 10, **dadurch gekennzeichnet, daß** sie eine Schnittstelle umfasst, über die eine manuell bedienbaren digitale Kamera (13) anschließbar ist.

12. Vorrichtung nach einem der Ansprüche 9 bis 11, **dadurch gekennzeichnet, daß** sie Eingabemittel zur Eingabe von dem aufgenommenen Gegenstand zugeordneten Datensätzen umfaßt.

13. Vorrichtung nach einem der Ansprüche 9 bis 12, **dadurch gekennzeichnet, daß** sie einen Schließmechanismus (4) umfaßt, der durch die Steuervorrichtung (5) aktivierbar ist.

14. Vorrichtung nach einem der Ansprüche 9 bis 13, **dadurch gekennzeichnet, daß** sie einen Schließsensor für einen Schließmechanismus (4) für mindestens einen Eingang (2) zu dem Aufnahmeraum (1) umfaßt, wobei der Schließsensor ein Signal an die Steuervorrichtung (5) abgibt, wenn der Schließmechanismus (4) geschlossen ist.

15. Vorrichtung nach einem der Ansprüche 9 bis 14, **dadurch gekennzeichnet, daß** sie eine Schnittstelle für den Anschluß an ein digitales Datennetz, insbesondere das Internet (18), aufweist.

## Claims

1. A method for recording digital images of objects to be represented, in particular motor vehicles (12), from various observation angles, comprising the following steps:
- placing the object (12) on a turntable (9);
- continuously rotating the turntable (9);
**characterized by**:
- generating electronic trigger signals in given angular positions of the turntable (9) while the turntable (9) is rotating;
- transmitting the trigger signals to a control device (5) for a digital camera (8); and
- recording an image with the digital camera (8) when a trigger signal is received.

2. The method as recited in Claim 1,
**characterized in that** a video data stream is transmitted from the camera (8) to the control device (5), and when a trigger signal is received the control device (5) takes an individual frame from the video data stream and stores the frame in a data memory device (23).

3. The method as recited in Claim 1 or 2,
**characterized in that** when the trigger signal is received the control device (5) actuates additional devices, for example flashes or a zoom lens for the camera (8).

4. The method as recited in one of the preceding claims,
**characterized in that** the recording of the images is ended after the turntable (9) has rotated by a given angle, in particular 360°.

5. The method as recited in one of the preceding claims,
**characterized in that** each of the recorded images is stored in a digital data memory device (23) in conjunction with an identifier which is uniquely associated with the object.

6. The method as recited in Claim 5,
**characterized in that** at least one additional, manually recorded image is stored in the digital data memory device (23) in conjunction with an identifier which is uniquely associated with the object.

7. The method as recited in one of the preceding claims,
**characterized in that** each of the recorded images is compared to a reference image of the turntable (9) without the object (12) thereon, and the background is deleted from the recorded image, wherein preferably pixels of the recorded image which correspond to matching pixels of the reference image within predetermined limit values are deleted.

8. The method as recited in one of the preceding claims,
**characterized in that** the control device (5) is connected to a closing sensor of a closing mechanism (4) for at least one entrance (2) into the recording room (1), the closing sensor emitting a signal when the closing mechanism (4) is closed, and the control device (5) blocking the recording process until this signal is received.

9. A device for recording digital images of objects to be represented, in particular motor vehicles (12), from various observation angles, comprising:
- a continuously rotatable turntable (9);
**characterized by**:
- a trigger device (11) associated with the turntable (9), which generates electronic trigger signals in given angular positions of the turntable (9) while the turntable (9) is rotating;
- a digital camera (8);
- a control device (5) for controlling the camera (9),
- transmission means for transmitting the trigger signals from the trigger device to the control device (5); and
- a data memory device (23) for storing the image recorded by the digital camera (8) when a trigger signal is received.

10. The device as recited in Claim 9,
**characterized in that** the device includes additional devices, for example flashes, which are actuated by the control device (5) when the trigger signal is received.

11. The device as recited in Claim 9 or 10,
**characterized in that** the device includes an interface via which a manually operable digital camera (13) may be connected.

12. The device as recited in one of Claims 9 through 11,
**characterized in that** the device includes input means for inputting data records associated with the recorded object.

13. The device as recited in one of Claims 9 through 12,
**characterized in that** the device includes a closing mechanism (4) which may be actuated by the control device (5).

14. The device as recited in one of Claims 9 through 13,
**characterized in that** the device includes a closing sensor for a closing mechanism (4) for at least one entrance (2) into the recording room (1), the closing sensor emitting a signal to the control device (5) when the closing mechanism (4) is closed.

15. The device as recited in one of Claims 9 through 14,
**characterized in that** the device has an interface for connection to a digital data network, in particular the Internet (18).

## Revendications

1. Procédé d'enregistrement d'illustrations numériques d'objets à représenter, en particulier des véhicules (12), à partir de différents angles de visualisation comprenant les étapes suivantes :
- mise en place de l'objet (12) sur un disque rotatif (9),
- rotation continue du disque rotatif (9), **caractérisé par** :
- génération de signaux déclencheurs électroniques lors de la rotation du disque rotatif (9) dans certaines positions d'angle du disque rotatif (9),
- transmission des signaux déclencheurs à un dispositif de commande (5) pour une caméra thermique (8).
- enregistrement d'une illustration par la caméra thermique (8) en cas de réception d'un signal déclencheur.

2. Procédé selon la revendication 1, **caractérisé en ce qu'**un flux de données vidéo est transmis de la caméra (8) au dispositif de commande (5) et **en ce que** le dispositif de commande (5) prélève, en cas de réception d'un signal déclencheur provenant du flux de données vidéo, une image individuelle qui est mémorisée dans un dispositif de mémoire de données (23).

3. Procédé selon la revendication 1 ou 2, **caractérisé en ce que** le dispositif de commande (5) actionne, en cas de réception du signal déclencheur, d'autres dispositifs tels que par exemple flashs ou un zoom de la caméra (8).

4. Procédé selon l'une des revendications précédentes, **caractérisé en ce que** l'enregistrement des illustrations est terminé après une rotation du disque rotatif (9) d'un angle défini, en particulier 360°.

5. Procédé selon l'une des revendications précédentes, **caractérisé en ce que** chacune des illustrations enregistrées est mémorisée dans un dispositif numérique de mémoire de données (23) en liaison avec une indication d'identification qui est attribuée clairement à l'objet.

6. Procédé selon la revendication 5, **caractérisé en ce qu'**au moins une illustration, supplémentaire, enregistrée manuellement est mémorisée dans le dispositif numérique de mémoire de données en liaison avec une indication d'identification qui est attribuée clairement à l'objet.

7. Procédé selon l'une des revendications précédentes, **caractérisé en ce que** chacune des illustrations enregistrées est comparée avec une illustration de référence du disque rotatif (9) sans objet (12) se trouvant dessus et l'arrière-plan est supprimé de l'illustration enregistrée, les points d'image de l'illustration enregistrée, qui correspondent dans le cadre de valeurs limites prédéfinies aux points d'image correspondants de l'illustration de référence, étant supprimés de préférence.

8. Procédé selon l'une des revendications précédentes, **caractérisé en ce que** le dispositif de commande (5) est relié à un capteur de fermeture d'un mécanisme de fermeture (4) pour au moins une entrée (2) de l'espace de logement (1), le capteur de fermeture émettant un signal lorsque le mécanisme de fermeture (4) est fermé, et **en ce que** la réalisation d'une opération d'enregistrement est bloquée par le dispositif de commande (5) aussi longtemps que ledit signal n'est pas reçu.

9. Dispositif pour l'enregistrement d'illustrations numériques d'objets à représenter, en particulier des véhicules (12), à partir de différents angles d'observation comprenant :
- un disque rotatif (9) pouvant tourner de façon continue, **caractérisé par** :
- un dispositif déclencheur (11) attribué au disque rotatif (9), qui génère lors de la rotation du disque rotatif (9) des signaux déclencheurs électroniques dans certaines positions angulaires du disque rotatif (9),
- une caméra thermique (8),
- un dispositif de commande (5) pour la commande de la caméra (9),
- des moyens de transmission pour la transmission des signaux de déclencheurs du dispositif déclencheur au dispositif de commande (5),
- un dispositif de mémoire de données (23) pour la mémorisation de l'illustration enregistrée par la caméra thermique (8) en cas de réception d'un signal déclencheur.

10. Dispositif selon la revendication 9, **caractérisé en ce qu'**il comprend d'autres dispositifs, tels que flashs, qui sont activés en cas de réception du signal déclencheur par le dispositif de commande (5).

11. Dispositif selon la revendication 9 ou 10, **caractérisé en ce qu'**il comprend une interface par laquelle une caméra (13) numérique pouvant être commandée manuellement peut être raccordée.

12. Dispositif selon l'une des revendications 9 à 11, **caractérisé en ce qu'**il comprend des moyens d'entrée pour l'entrée d'ensembles de données attribués à l'objet enregistré.

13. Dispositif selon l'une des revendications 9 à 12, **caractérisé en ce qu'**il comprend un mécanisme de fermeture (4), qui peut être activé par le dispositif de commande (5).

14. Dispositif selon l'une des revendications 9 à13, **caractérisé en ce qu'**il comprend un capteur de fermeture pour un mécanisme de fermeture (4) pour au moins une entrée (2) de l'espace de logement (1), le capteur de fermeture envoyant un signal au dispositif de commande (5) lorsque le mécanisme de fermeture (4) est fermé.

15. Dispositif selon l'une des revendications 9 à 14, **caractérisé en ce qu'**il présente une interface pour le raccordement à un réseau de données numérique, en particulier Internet (18).
